(19) Europäisches Patentamt
European Patent Office
Office européen des brevets

(11) **EP 2 584 187 A1**

(12) **DEMANDE DE BREVET EUROPEEN**

(43) Date de publication:
**24.04.2013 Bulletin 2013/17**

(51) Int Cl.:
*F02P 19/02* *(2006.01)*    *F02N 19/02* *(2010.01)*
*F02N 11/08* *(2006.01)*

(21) Numéro de dépôt: **12185824.5**

(22) Date de dépôt: **25.09.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **21.10.2011  FR 1159562**

(71) Demandeur: **PEUGEOT CITROËN AUTOMOBILES SA**
**78140 Velizy-Villacoublay (FR)**

(72) Inventeur: **Doux, Florian**
**92800 Puteaux (FR)**

(54)    **Procédé d'optimisation de la durée de la séquence de démarrage d'un moteur thermique diesel**

(57)    L'invention concerne un procédé d'optimisation de la durée de la séquence de démarrage d'un moteur thermique, la durée de la séquence de démarrage commençant par une requête de démarrage (Ri_redem_ MTH).

Selon l'invention, les opérations suivantes sont effectuées en parallèle:
- le préchauffage des chambres de combustion du moteur;
- la synchronisation du moteur avec le cycle de combustion ; et
- l'obtention d'une pression Prail dans la rampe d'alimentation commune permettant la vaporisation du carburant injecté dans les cylindres;

et ladite durée de la séquence de démarrage se termine par une autorisation d'injection du carburant dans les cylindres du moteur thermique (Aut_inj_MTH).

**Figure 1**

**Description**

La présente invention concerne un procédé d'optimisation de la durée de la séquence de démarrage ou de redémarrage d'un moteur thermique qui comporte des bougies de préchauffage des chambres de combustion, tel que par exemple un moteur de type Diesel.

Les véhicules hybrides électrique-thermique comportent un moteur thermique et un ou plusieurs moteur(s) électrique(s) alimenté(s) par une source d'énergie électrique, généralement une batterie. Le déplacement du véhicule en mode tout électrique est limité par la charge de la source électrique et n'est possible que pendant une durée très courte et un rayon d'action réduit. Pour palier cet inconvénient, la source d'énergie électrique est alors rechargée à l'aide du moteur thermique remis en marche par un organe de démarrage tel qu'un démarreur ou un alterno-démarreur. Cependant, la (re)mise en marche d'un moteur Diesel n'est pas immédiate, puisqu'il faut, si nécessaire, notamment réchauffer les chambres de combustion.

Quelque soient les conditions de roulage en mode électrique, le démarrage du moteur thermique doit être possible en un temps limité pour des raisons de sécurité (temps de mise à disposition du couple du moteur thermique) et des aspects de perception du conducteur et des passagers du véhicule. La remise en marche du moteur thermique peut être urgente, par exemple s'il faut une accélération importante du véhicule, en cas de dépassement d'un autre véhicule. Cependant la (re)mise en marche du moteur Diesel peut ne pas être urgente, par exemple s'il s'agit d'assurer le confort de l'habitacle (la climatisation ou le chauffage par exemple). Ainsi, les possibilités de roulage en mode électrique sont actuellement réduites aux cas où la température dans les chambres de combustion est suffisante pour assurer à tout moment un démarrage du moteur thermique en un temps raisonnable et sans raté.

Une solution consiste alors à préchauffer les chambres de combustion en activant très régulièrement les bougies de préchauffage. Cette solution ne peut être envisagée qu'avec des bougies de technologie "céramique", capable de fonctionner sur une longue durée. Mais ces bougies coutent relativement cher et le prix de revient de cette solution peut être prohibitif. Il est donc nécessaire de trouver une solution permettant d'utiliser un autre type de bougies, les bougies de type "métallique", d'un coût plus abordable. Cependant, les bougies de type métallique ne peuvent être utilisées que pendant de courtes durées, sinon elles peuvent se briser et entrainer la casse du moteur thermique. Le fonctionnement d'un véhicule hybride en mode "tout électrique" est donc parfois indisponible en raison de ces contraintes liées aux bougies malgré une capacité suffisante en termes d'énergie disponible dans la batterie. Il faut donc démarrer le moteur Diesel dès la mise en action du véhicule si le moteur thermique est froid ou, à défaut, le démarrer systématiquement au bout d'une temporisation très réduite après le début du roulage en mode électrique malgré une réserve d'énergie électrique encore suffisante à la mobilité du véhicule.

L'utilisation de bougies de préchauffage de type métallique serait donc à priori incompatible avec un roulage en mode électrique d'une cinquantaine de kilomètres, ce qui est pourtant l'autonomie souhaitée actuellement pour les véhicules hybrides munis d'une source d'énergie électrique rechargeable à l'aide d'une prise de courant.

La présente invention propose une solution permettant de démarrer ou de redémarrer le moteur thermique en un temps satisfaisant, compatible avec une utilisation de bougies de préchauffage de type métallique, en optimisant la durée de la séquence de (re)démarrage.

La demande de brevet FR2931119 A1 décrit un procédé d'anticipation du démarrage d'un moteur thermique d'un véhicule hybride selon lequel on élabore un signal d'anticipation à partir de valeurs de couple anticipées et de valeurs de couple traduisant la volonté du conducteur. Cependant, ce procédé ne tient pas compte des spécificités particulières au (re)démarrage d'un moteur Diesel, comme par exemple le temps de préchauffage des chambres de combustion.

La présente invention propose un procédé d'optimisation de la durée de la séquence de démarrage d'un moteur thermique qui comporte des bougies de préchauffage et un organe d'entrainement du moteur pour son démarrage, ladite durée de la séquence de démarrage commençant par une requête de démarrage dudit moteur thermique Ri_redem_MTH. Selon ce procédé, les opérations suivantes sont effectuées en parallèle:

- le préchauffage des chambres de combustion dudit moteur si la température dans les chambres de combustion n'est pas suffisante pour obtenir l'auto-inflammation du carburant injecté dans lesdites chambres;
- la synchronisation dudit moteur avec le cycle de combustion ; et
- l'obtention d'une pression Prail dans la rampe d'alimentation commune permettant la vaporisation du carburant injecté dans les cylindres;

et ladite durée de la séquence de démarrage se termine par une autorisation d'injection du carburant dans les cylindres du moteur thermique Aut_inj_MTH.

Le mode de mise en oeuvre préféré de l'invention comporte au moins l'une des étapes suivantes:

On détermine un temps d'attente conseillé "T_att_dem_MTH" avant l'entrainement du moteur thermique, ledit temps étant fonction du temps restant "T_fin_prep_MTH" de préchauffage des chambres de combustion et du temps minimum "T_min_ent_dem_ss_inj_MTH" d'entrainement du moteur thermique pour un démarrage sans injection de carburant, le temps minimum d'entrainement étant le temps nécessaire pour obtenir la pression Prail et ladite synchronisation.

Ledit temps d'attente "T_att_dem_MTH" est égal à:

Max(0; T_fin_prep_MTH - T_min_ent_dem_ss_inj_MTH)

Ledit temps "T_min_ent_dem_ss_inj_MTH" est calculé à partir du nombre de tours minimum de vilebrequin du moteur thermique pour le démarrage dudit moteur sans injection de carburant "Tr_vil_min_dem_ss_inj_MTH"

Ledit nombre de tours "Tr_vil_min_dem_ss_inj_MTH" est égal à:

Max(Tr_vil_min_synchro; Tr_vil_min_Prail),

"Tr_vil_min_synchro" étant le nombre minimum de tours de vilebrequin pour obtenir la synchronisation du moteur thermique avec le cycle de combustion et "Tr_vil_min_Prail" étant le nombre minimum de tours vilebrequin pour obtenir la pression Prail.

Lorsqu'une requête de démarrage du moteur thermique a été émise, ledit temps restant "Tfin_prep_MTH" de préchauffage des chambres de combustion est déterminé en fonction de différentes informations et en fonction d'un temps de criticité de ladite requête de démarrage.

Lesdites informations comprennent au moins l'un des paramètres suivants: la température du liquide de refroidissement du moteur thermique, la température de l'air, la pression atmosphérique et un paramètre influençant la capacité du carburant à s'auto-enflammer.

Ledit temps de criticité est défini par un temps maximum souhaitable de mise à disposition du couple moteur, ledit temps étant fonction de l'urgence à fournir ledit couple.

Ledit temps de criticité comporte un nombre limité de temps prédéfinis.

Si le temps d'attente conseillé avant l'entrainement dudit organe d'entrainement ("Tatt_dem_MTH") est nul, ladite autorisation d'injecter (Aut_inj_MTH) est accordée lorsque les conditions suivantes sont réunies:

- la synchronisation du MTH est réalisée (Synchronisation OK = 1);
- la pression dans le rail est suffisante pour obtenir l'auto-inflammation du carburant injecté dans les cylindres (Prail OK=1); et
- le temps restant de préchauffage est nul (Tfin_prep_MTH=0)

Si le temps d'attente conseillé avant l'entrainement dudit organe d'entrainement ("Tatt_dem_MTH") n'est pas nul, ladite autorisation d'injecter est accordée lorsque les conditions suivantes sont réunies:

- la synchronisation du MTH est réalisée (Synchronisation OK = 1); et
- la pression dans le rail est suffisante pour obtenir l'auto-inflammation du carburant injecté dans les cylindres (Prail OK=1)

D'autres caractéristiques et avantages de l'invention apparaîtront au cours de la description qui suit d'un mode de réalisation de l'invention, donné à titre d'exemple non limitatif et en référence aux dessins annexés qui montrent:

- la figure 1, le schéma fonctionnel de l'environnement du procédé d'optimisation de la durée de démarrage d'un moteur thermique, et

- la figure 2, un chronogramme du démarrage d'un moteur thermique selon l'invention.

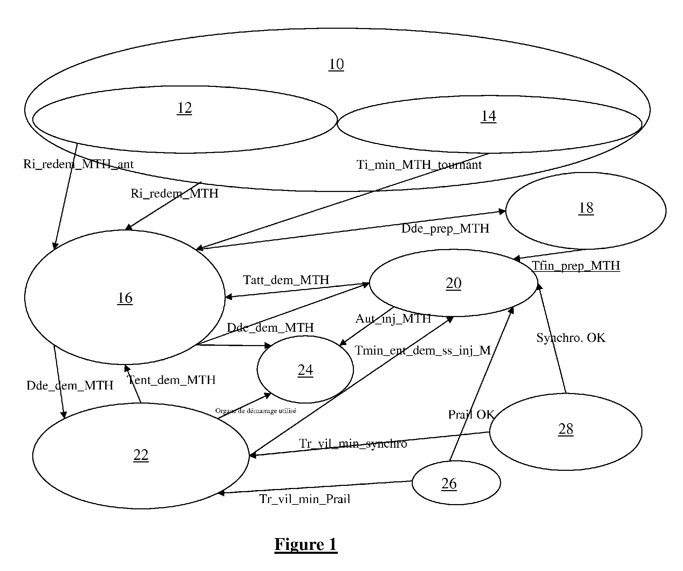

La figure 1 concerne le fonctionnement d'un moteur thermique Diesel équipant un véhicule hybride électrique-thermique. Plusieurs fonctions 10, appelées "fonctions i" sont susceptibles de demander le (re)démarrage du moteur thermique MTH (requête désignée par "Ri_redem_MTH"). Par la suite, le terme "démarrage" ou "redémarrage" comprendra aussi bien le démarrage proprement-dit du moteur thermique MTH, que le redémarrage du moteur. Les fonctions i dépendent d'une stratégie de démarrage 12, par exemple la stratégie exposée dans la demande de brevet FR 2.931.119, déposée par la demanderesse et publiée le 20/11/2009. A chaque fonction i est associée une criticité 14 de la demande de démarrage, c'est-à-dire un souhait de temps maximum de mise à disposition du couple MTH (désigné par "Ti_max_MTH_tournant") et cela éventuellement de manière anticipée (la requête R de démarrage étant désignée par "Ri_redem_MTH_ant"). A titre d'exemple, les fonctions i peuvent être classées en trois niveaux différents 1, 2 et 3 selon leur criticité.

Les fonctions "1" de confort habitacle (chauffage, climatisation, désembuage...) peuvent demander le démarrage du MTH de manière totalement imprévisible lors de leur première activation car elles dépendent d'une action du conducteur. En revanche, leurs requêtes sont peu urgentes car le déclenchement de la prestation thermique (apportées directement par la mise en route du MTH et/ou d'un compresseur) n'est pas vraiment déterminable ou sensible dans l'immédiat par le conducteur et les passagers. En conséquence:

R_1_redem_MTH = 1 lors de l'activation de la fonction ou en fonction de l'évolution de la grandeur ou de la consigne s'il s'agit du chauffage ou de la climatisation.

R_1_redem_MTH_ant = NA (non applicable) lors de l'activation de la fonction puis en fonction de l'évolution de la grandeur ou de la consigne s'il s'agit du chauffage ou de la climatisation.

On peut alors définir, pour la fonction i, un temps maximum $T_i$ souhaité de mise à disposition du couple du MTH: Tmax_1_MTH_tournant = 3s (valeur arbitraire à titre d'exemple).

Les fonctions "2" demandant le démarrage en fonction de grandeur évoluant avec une dynamique lente comme la température du liquide de refroidissement du MTH, la température d'air, le niveau de puissance batterie, etc..., sont assez bien prévisibles par décalage de seuil et constituent des requêtes peu urgentes car non sécuritaires dans l'immédiat. Par construction ces requêtes sont conçues et calibrées pour éviter de se retrouver dans des situations délicates (MTH qui a du mal a démarré car trop refroidi ou parce qu'un organe est insuffisant en raison de la charge insuffisante de la batterie, etc...)

R_2_redem_MTH = 1 lors du dépassement par le bas d'un seuil (par exemple, si la charge de la batterie est inférieure à 25%)

R_2_MTH_ant = 1 lors du dépassement par le bas d'un seuil en anticipation d'un autre (par exemple si la charge de la batterie est inférieure à 30%). T_2_MTH_tournant= 2,5s (valeur arbitraire à titre d'exemple).

Les fonctions "3" demandent le démarrage du MTH en fonction de grandeurs évoluant avec une dynamique rapide comme la consigne de couple aux roues qui reflète la volonté du conducteur d'accélérer ou de décélérer le véhicule via la pédale d'accélérateur. La prévisibilité de ce type de requête est fortement variable en fonction du comportement du conducteur mais peut être gérer par l'implémentation de stratégies comme décrites dans la demande de brevet précitée FR 2.931.119. R_3_redem_MTH = 1 lors du dépassement d'un seuil (exemple: si le couple de consigne est supérieur au couple réalisable par la machine électrique). R_3_redem_MTH_ant = 1 lors du dépassement d'un seuil en anticipation d'un autre seuil plus élevé (par exemple, si le couple de consigne est supérieur au couple réalisable par la machine électrique).

T_3_MTH tournant = 2s (valeur arbitraire à titre d'exemple bien que 2s soit en général le temps le plus critique admis en sureté de fonctionnement.

Dans cet exemple, le temps maximum souhaité de mise à disposition du couple moteur Ti_max_MTH_tournant est limité à trois valeurs distinctes prédéfinies pour toutes les fonctions. En variante, le nombre de valeurs peut être plus important, chaque fonction pouvant même disposer de sa propre valeur.

Sur la figure 1, des fonctions i 10 demandant le démarrage du MTH sont reliées à une stratégie d'anticipation 12 de démarrage et à une détermination 14 de la criticité de la demande de démarrage du MTH selon la fonction i. La stratégie de démarrage 12 envoie des requêtes de démarrage anticipées (Ri_redem_MTH_ant) et des requêtes de démarrage (Ri_redem_MTH) à une fonction de stratégie d'arbitrage 16 intégrée dans le superviseur marche/arrêt du MTH (cette stratégie d'arbitrage peut être par exemple comme décrite dans les demandes de brevet, déposées par la demanderesse le 06/09/2011, FR 1157867 ayant pour titre "Stratégie d'arbitrage de démarrage d'un moteur Diesel" et FR 1157868 ayant pour titre "Stratégie de préparation de démarrage d'un moteur Diesel"). L'objectif de la stratégie 16 est de solliciter au plus juste les bougies de préchauffage. Pour cela, d'une part, la stratégie optimise le compromis qualité du démarrage /urgence que le MTH soit mis en marche et, d'autre part, la stratégie demande le préchauffage de manière opportune, c'est-à-dire pas en permanence, avec une criticité ajustée en fonction de la situation: de manière urgente ou moyennement urgente si le démarrage a déjà commencé, de manière non urgente dans le cas de requêtes de démarrage anticipées.

La fonction de détermination de criticité 14 de la demande de démarrage du MTH selon la fonction i envoie à la stratégie d'arbitrage 16 un temps maximum souhaité de mise à disposition du couple MTH (Ti_max_MTH_tournant). La stratégie d'arbitrage 16 envoie alors à une fonction 18 de pilotage des bougies de préchauffage du MTH une demande de préparation du MTH en fonction de la criticité du démarrage (Dde_prep_MTH). Cette fonction 18 calcule à tout instant le besoin, en termes de préchauffage des chambres de combustion du MTH en fonction de sa température d'eau, d'air et de la pression atmosphérique. Ce besoin est traduit à tout instant en durée restante de préchauffage rapide conseillée avant l'entrainement du MTH (Tfin_prep_MTH). La qualité du démarrage du MTH (absence de ratés de combustion) augmente lorsque cette valeur diminue. Ainsi, la stratégie 16 a une image à chaque instant de la capacité du MTH à auto-enflammer du carburant. A titre d'exemple, la capacité est respectivement excellente ou très mauvaise si Tfin_prep_MTH est égale à 0 ou supérieure à 2s. Les chambres de combustion sont progressivement montées en température avec une dynamique qui dépend de la sollicitation des bougies de préchauffage. Cette sollicitation dépend de la requête de préparation Dde_prep_MTH.

Le temps restant de préchauffage Tfin_prep_MTH est envoyé à un coordinateur 20 de préparation de démarrage du MTH. Le coordinateur 20 détermine un temps d'attente conseillé avant entrainement du MTH (Tatt_dem_MTH) en fonction:

- du temps mini d'entrainement du MTH sans injection de carburant (Tmin_ent_dem_ss_inj_MTH) en provenance d'une fonction de pilotage 22 de l'organe de démarrage qui peut être un démarreur ou un alternodémarreur ou l'embrayage (lorsque le véhicule est poussé pour démarrer le moteur), et
- du temps restant de préchauffage rapide (Tfin_prep_MTH) en provenance du pilotage des bougies de préchauffage 18.

La fonction de pilotage 22 du démarreur ou de l'alternodémarreur élabore une estimation du temps d'entrainement du MTH nécessaire à son démarrage, Tent_dem_MTH, en fonction de la difficulté à entrainer le MTH qui dépend du couple résistif du MTH et du couple réalisable par le démarreur ou l'alternodémarreur.

Le coordinateur 20 détermine également une autorisation d'injection Aut_inj_MTH à destination d'une fonction 24 de pilotage des injections de carburant en fonction de:

- la pression Prail régnant dans la rampe d'alimentation commune (appelée couramment "rail") Prail_OK en provenance d'une fonction de gestion de la pression rail 26;
- la synchronisation Synchronisation_OK en provenance d'une fonction de synchronisation 28 du MTH;
- la consigne de démarrage du MTH Dde_dem_MTH en provenance de la stratégie d'arbitrage 16; et
- du temps restant de préchauffage rapide Tfin_prep_MTH en provenance du pilotage des bougies de préchauffage 18.

La fonction 24 de pilotage des injections de carburant pour le démarrage du MTH calcule les quantités de carburant à injecter à chaque instant en vue du démarrage en fonction de l'organe de démarrage utilisé. Le carburant est injecté en présence d'une consigne de démarrage du MTH (Dde_dem_MTH = 1) et de l'autorisation d'injection (Aut_inj_MTH = 1).

Par synchronisation du MTH assurée par la fonction 28, on entend la détermination de la position des pistons par rapport au cycle de combustion (déterminée à l'aide d'un capteur de la position du vilebrequin et d'un capteur de la position de l'arbre à came). La gestion de la synchronisation 28 détermine:

- le nombre de tours vilebrequin à effectuer depuis l'état MTH arrêté garantissant l'obtention de la synchronisation du MTH "Tr_vil_min_synchro", le nombre de tours étant traduit en un temps équivalent en fonction de la situation de vie telle que la charge de la batterie;
- si la position du MTH est connue dans le cycle de combustion (par exemple cycle à 4 temps): "Synchronisation OK"

La gestion 26 de la pression rail détermine:

- le nombre minimum de tours vilebrequin à effectuer garantissant une pression rail suffisante pour injecter le carburant dans les cylindres: "Tr_vil_min_Prail", et
- si la pression rail est suffisante pour injecter: "Prail_OK".

Selon la présente invention, la durée de la séquence de démarrage d'un moteur thermique est optimisée en déterminant l'instant optimal de début d'entrainement du MTH. Cet instant permet d'assurer le succès de la première injection de carburant dès que celle-ci est autorisée (synchronisation provenant de la gestion synchronisation 28 et pression rail suffisante provenant de la gestion pression rail 26), en faisant en sorte que cette autorisation d'injection arrive à l'instant même où la préparation thermique des chambres de combustion n'est plus nécessaire (Tfin_prep_MTH = 0). On effectue en parallèle les actions de préchauffage des chambres de combustion, de montée en pression dans le rail et de synchronisation dans les instants où le MTH est entrainé mais n'injecte pas encore de carburant car toutes les conditions ne sont pas requises.

Cet instant optimal correspond à la valeur nulle de "Tatt_dem_MTH" (temps d'attente conseillé avant l'entrainement du MTH) qui est défini par un rétro calcul à partir des valeurs suivantes:

- Tfin_prep_MTH: temps restant de préchauffage et donc avant que les chambres de combustion soient à une température garantissant l'auto-inflammation dès la première injection de carburant. Le temps restant de préchauffage dépend des conditions extérieures (température du liquide de refroidissement, température d'air, pression atmosphérique et éventuellement d'autres paramètres influençant la capacité du carburant à s'auto-enflammer) et dépend également de la criticité de la demande de préparation du MTH (préparation moyennement ou hautement prioritaire, etc...).
- Tmin_ent_dem_ss_inj_MTH: temps minimum d'entrainement du MTH nécessaire, d'une part, à l'obtention de la synchronisation du MTH et, d'autre part, à l'obtention d'une pression rail permettant un débit et une vaporisation suffisante du carburant injecté en fonction des conditions actuelles (position d'arrêt du MTH si elle est connue par la stratégie 28 de synchronisation du MTH, la température de liquide de refroidissement, la température du carburant pour la pression rail).

Pour déterminer la valeur du temps d'attente conseillé avant l'entrainement Tatt_dem_MTH, on applique la formule logique suivante: Tatt_dem_MTH=Max(0; Tfin_prep_MTH - Tmin_ent_dem_ss_inj_MTH) dans laquelle:

- Tfin_prep_MTH est le temps restant de préchauffage et
- Tmin_ent_dem_ss_inj_MTH est le temps minimum pour obtenir la pression Prail et la Synchronisation.

Si la différence entre le temps restant de préchauffage et le temps minimum pour obtenir la Prail et la Synchronisation est négative, alors le temps d'attente conseillé est égal à 0.

Concernant la détermination du temps minimum d'entrainement du MTH sans injection de carburant Tmin_ent_dem_ss_inj_MTH, la fonction de synchronisation exprime un nombre de tours vilebrequin minimum à effectuer depuis l'état MTH arrêté garantissant l'obtention de la synchronisation du MTH: "Tr_vil_min_synchro". Suivant la stratégie de synchronisation mise en place pour le MTH, ce nombre de tours "Tr_vil_min_synchro" peut notamment dépendre de la position d'arrêt du MTH si celle-ci est connue.

La fonction de pression rail 26 détermine la pression rail permettant un débit et une vaporisation suffisante du carburant injecté "Prail_min_inj" pour que le MTH puisse démarrer en fonction des conditions actuelles (température du liquide de refroidissement et du carburant).En fonction de "Prail_min_inj" et de la pression rail courante Prail, un nombre minimum de tours vilebrequin à effectuer depuis l'état MTH arrêté est déterminé: "Tr_vil_min_Prail".

Le nombre minimum de tours vilebrequin pour l'entrainement du MTH pour le démarrage sans injection est donné par l'équation logique:

Tr_vil_min_dem_ss_inj_MTH = Max(Tr_vil_min_synchro; Tr_vil_min_Prail) dans laquelle:

- Tr_vil_min_synchro est le nombre minimum de tours de vilebrequin pour obtenir la synchronisation, et
- Tr_vil_min_Prail est le nombre minimum de tours de vilebrequin pour obtenir la pression dans le rail permettant l'auto-inflammation du carburant.

En fonction des différentes contraintes du MTH (couples résistifs, couples réalisables), Tr_vil_min_dem_ss_inj_MTH est traduit en durée d'entrainement: Tmin_ent_dem_ss_inj_MTH.

La durée de la séquence de démarrage du moteur thermique commence avec une requête de démarrage Ri_redem_MTH émise par une fonction i 10 et se termine par l'autorisation d'injecter le carburant Aut_inj_MTH émise par le coordinateur de préparation de démarrage 20.

L'autorisation d'injection "Aut_inj_MTH" est déterminée comme suit, selon l'urgence ou la criticité du démarrage du MTH:

- si une demande de démarrage Dde_dem_MTH est émise par la stratégie d'arbitrage 16 (par exemple si Dde_dem_MTH = 1) et si le temps d'attente conseillé avant l'entrainement du MTH est égal à 0 (Tatt_dem_MTH = 0), il n'y a pas d'urgence à démarrer le MTH et en conséquence l'autorisation d'injection de carburant est donnée par la formule logique:

Aut_inj_MTH=(Synchronisation OK=1) & (Prail OK=1) & (Tfin_prep_MTH=0) Tfin_prep_MTH étant le temps restant de préchauffage rapide. L'injection commencera quand toutes ces conditions sont réunies, donc sans raté de combustion.

Par contre, si une demande de démarrage Dde_dem_MTH est émise alors que le temps d'attente conseillé avant entrainement Tatt_dem_MTH n'est pas nul, la stratégie d'arbitrage 16 effectue un arbitrage entre la possibilité de démarrer et la criticité ou l'urgence du démarrage. Dans ce cas, l'autorisation d'injection du carburant Aut_inj_MTH est calculée par la formule logique:

$$Aut\_inj\_MTH = (Synchronisation\ OK = 1)\ \&\ (Prail\ OK = 1)$$

L'injection de carburant commence alors sans attendre la fin du préchauffage rapide donc avec des risques de ratés de combustion.

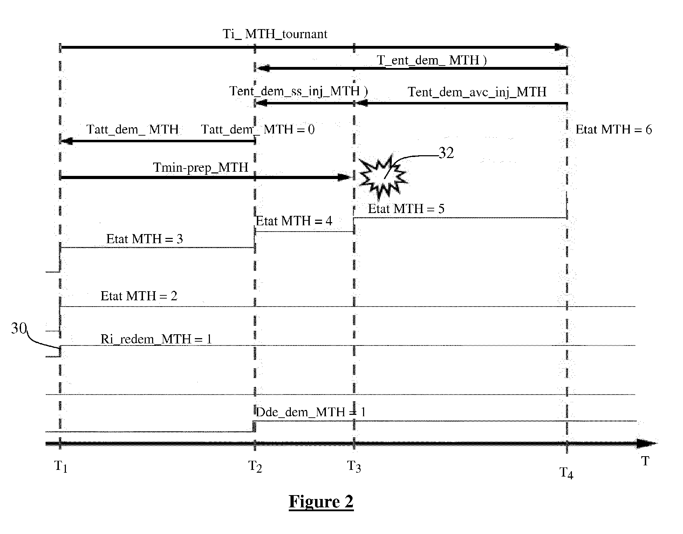

La figure 2 représente un chronogramme du procédé de l'invention. Sur cette figure, le MTH peut prendre différents états repérés de la façon suivante:

- état 0: moteur arrêté
- état 1 : préparation préventive du MTH sans entrainement
- état 2: préparation préventive du MTH avec entrainement
- état 3: préparation curative (c'est-à-dire que l'on souhaite démarrer le MTH mais il est froid)
- état 4: le MTH est entrainé sans injection de carburant
- état 5: le MTH est entrainé avec injection de carburant
- état 6: le MTH est en marche.

Avant le temps $T_1$, le MTH est à l'état 0, donc arrêté. A l'instant $T_1$ une fonction i demande le démarrage du MTH (référence 30). Le coordinateur de préparation de démarrage (20 sur la figure 1) émet en direction de la stratégie d'arbitrage 16 un temps d'attente conseillé avant l'entrainement du MTH (Tatt_dem_MTH). Une requête Ri_redem_ MTH = 1 est envoyée par le module 10 de demande de démarrage (figure 1). Le moteur passe alors par les états successifs 2 et 3 (Etat_MTH = 2 et Etat_MTH = 3). A l'instant $T_2$, une consigne de démarrage (Dde_dem_MTH = 1) est envoyée par la stratégie d'arbitrage 16 au pilotage des injections de carburant 24. Le temps d'attente passe alors à 0 (Tatt_dem_MTH = 0) et commence une phase d'entrainement du MTH sans injection de carburant (Tent_dem_ss_inj_ MTH). Le MTH est alors entrainé sans injection (état 4; Etat_MTH = 4) jusqu'à l'instant $T_3$ au bout duquel on a obtenu une pression suffisante dans le rail (Prail_OK = 1), la synchronisation du MTH (Synchro_OK = 1) et le temps minimum restant de préchauffage est écoulé (Tmin_prep_MTH). L'intervalle de temps Tmin_prep_MTH compris entre les instants $T_2$ et $T_3$ est en fait masqué par le temps nécessaire à l'obtention de la synchronisation du MTH et l'obtention d'une pression rail suffisante pour l'auto-inflammation du carburant. Du temps $T_1$ au temps $T_3$, la préparation du moteur au démarrage a consisté, en parallèle, à chauffer les chambres de combustion, à obtenir la synchronisation du MTH et à élever la pression dans le rail de façon à pouvoir injecter le carburant et à obtenir l'auto-inflammation du carburant dès la première ou les toutes premières injection(s) de carburant dans les chambres de combustion. Le moteur est alors démarré avec injection de carburant au temps $T_3$, passant à l'état 5 (Etat MTH = 5), avec une première injection et combustion 32. Le moteur est entrainé avec injection de carburant (Tent_dem_avc_inj_MTH) du temps $T_3$ au temps $T_4$. La durée de la séquence de démarrage est indiquée sur la figure 2 par "Tent_dem_MTH", donc de $T_2$ à $T_4$.

L'invention s'applique tout particulièrement aux véhicules hybrides électrique-moteur thermique Diesel. Elle permet d'augmenter la durée des roulages en "tout électrique" sans user prématurément les bougies de préchauffage par une utilisation excessive. Elle permet également d'optimiser la durée des mises en action du moteur thermique qui nécessite le démarrage du MTH.


**Revendications**

1. Procédé d'optimisation de la durée de la séquence de démarrage d'un moteur thermique qui comporte des bougies de préchauffage et un organe d'entrainement dudit moteur pour son démarrage, ladite durée de la séquence de démarrage commençant par une requête de démarrage dudit moteur thermique (Ri_redem_MTH), le procédé étant **caractérisé en ce que** les opérations suivantes sont effectuées en parallèle:

   - le préchauffage des chambres de combustion du moteur si la température dans les chambres de combustion n'est pas suffisante pour obtenir l'auto-inflammation du carburant injecté dans lesdites chambres;
   - la synchronisation dudit moteur avec le cycle de combustion ; et
   - l'obtention d'une pression Prail dans la rampe d'alimentation commune permettant la vaporisation du carburant injecté dans les cylindres;
   et **en ce que** ladite durée de la séquence de démarrage se termine par une autorisation d'injection du carburant dans les cylindres du moteur thermique (Aut_inj_MTH).

2. Procédé selon la revendication 1 **caractérisé en ce que** l'on détermine un temps d'attente conseillé (T_att_dem_ MTH) avant l'entrainement du moteur thermique, ledit temps étant fonction du temps restant (T_fin_prep_MTH) de préchauffage des chambres de combustion et du temps minimum "T_min_ent_dem_ss_inj_MTH" d'entrainement dudit moteur thermique pour un démarrage sans injection de carburant, ledit temps minimum d'entrainement étant le temps nécessaire pour obtenir ladite pression Prail et ladite synchronisation.

3. Procédé selon la revendication 2 **caractérisé en ce que** ledit temps d'attente "T_att_dem_MTH" est égal à:

   = Max(0; T_fin_prep_MTH - T_min_ent_dem_ss_inj_MTH)

4. Procédé selon la revendication 2 ou 3 **caractérisé en ce que** ledit temps "T_min_ent_dem_ss_inj_MTH" est calculé à partir du nombre de tours minimum de vilebrequin pour le démarrage du moteur thermique sans injection de carburant "Tr_vil_min_dem_ss_inj_MTH"

5. Procédé selon la revendication 4 **caractérisé en ce que** ledit nombre de tours "Tr_vil_min_dem_ss_inj_MTH" est égal à:

Max(Tr_vil_min_synchro; Tr_vil_min_Prail),
"Tr_vil_min_synchro" étant le nombre minimum de tours de vilebrequin pour obtenir ladite synchronisation du moteur thermique avec le cycle de combustion et "Tr_vil_min_Prail" étant le nombre minimum de tours vilebrequin pour obtenir ladite pression Prail.

6. Procédé selon l'une des revendications 2 à 5 **caractérisé en ce que**, lorsqu'une requête de démarrage du moteur thermique a été émise, ledit temps restant "Tfin_prep_MTH" de préchauffage des chambres de combustion est déterminé en fonction de différentes informations et en fonction d'un temps de criticité de ladite requête de démarrage.

7. Procédé selon la revendication 6 **caractérisé en ce que** lesdites informations comprennent au moins l'un des paramètres suivants: la température du liquide de refroidissement du moteur thermique, la température de l'air, la pression atmosphérique et un paramètre influençant la capacité du carburant à s'auto-enflammer.

8. Procédé selon la revendication 6 ou 7 **caractérisé en ce que** ledit temps de criticité est défini par un temps maximum souhaitable de mise à disposition du couple moteur, ledit temps étant fonction de l'urgence à fournir ledit couple.

9. Procédé selon la revendication 8 **caractérisé en ce que** ledit temps de criticité comporte un nombre limité de temps prédéfinis.

10. Procédé selon l'une des revendications précédentes **caractérisé en ce que**, si le temps d'attente conseillé avant l'entrainement dudit organe d'entrainement ("Tatt_dem_MTH") est nul, ladite autorisation d'injecter (Aut_inj_MTH) est accordée lorsque les conditions suivantes sont réunies:

- la synchronisation du MTH est réalisée (Synchronisation OK = 1);
- la pression dans le rail est suffisante pour obtenir l'auto-inflammation du carburant injecté dans les cylindres (Prail OK=1); et
- le temps restant de préchauffage est nul (Tfin_prep_MTH=0)

11. Procédé selon l'une des revendications 1 à 9 **caractérisé en ce que**, si le temps d'attente conseillé avant l'entrainement dudit organe d'entrainement ("Tatt_dem_MTH") n'est pas nul, ladite autorisation d'injecter (Aut_inj_MTH) est accordée lorsque les conditions suivantes sont réunies:

- la synchronisation du MTH est réalisée (Synchronisation OK = 1); et
- la pression dans le rail est suffisante pour obtenir l'auto-inflammation du carburant injecté dans les cylindres (Prail OK=1)

**Figure 1**

10

12    14

Ri_redem_MTH_ant

Ti_min_MTH_tournant

Ri_redem_MTH

18

Dde_prep_MTH

Tfin_prep_MTH

Tatt_dem_MTH

16    20

Dde_dem_MTH    Aut_inj_MTH

24

Tmin_ent_dem_ss_inj_M

Synchro. OK

Dde_dem_MTH    Tent_dem_MTH

Organe de démarrage utilisé

Prail OK

28

22

Tr_vil_min_synchro

26

Tr_vil_min_Prail

**Figure 2**

Europäisches
Patentamt

European
Patent Office

Office européen
des brevets

**RAPPORT DE RECHERCHE EUROPEENNE**

Numéro de la demande

EP 12 18 5824

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2005 052879 A1 (BOSCH GMBH ROBERT [DE]) 10 mai 2007 (2007-05-10) | 1 | INV. F02P19/02 F02N19/02 F02N11/08 |
| A | * abrégé; revendication 2; figure 1 * * alinéa [0022] - alinéa [0045] * | 2-6 | |
| X | US 2007/240663 A1 (HIRAMATSU HIROMI [JP]) 18 octobre 2007 (2007-10-18) | 1 | |
| A | * abrégé; figure 7 * * alinéa [0137] - alinéa [0144] * | 2-11 | |
| X | WO 2008/090160 A1 (CONTINENTAL AUTOMOTIVE GMBH [DE]; HOFMEISTER CARL-EIKE [DE]; ZRILLI TA) 31 juillet 2008 (2008-07-31) * abrégé; revendication 1; figure 5 * * page 5, ligne 18 - page 6, ligne 17 * | 1 | |
| A | US 2006/144360 A1 (BEAUCAIRE JAMES [US] ET AL) 6 juillet 2006 (2006-07-06) * abrégé; revendication 2; figures 1-3 * * alinéa [0017] - alinéa [0021] * | 1,6,7 | |

DOMAINES TECHNIQUES RECHERCHES (IPC)

F02N
F02P

Le présent rapport a été établi pour toutes les revendications

| Lieu de la recherche | Date d'achèvement de la recherche | Examinateur |
|---|---|---|
| La Haye | 22 octobre 2012 | Van der Staay, Frank |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 12 18 5824

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-10-2012

| Document brevet cité au rapport de recherche | Date de publication | Membre(s) de la famille de brevet(s) | Date de publication |
|---|---|---|---|
| DE 102005052879 A1 | 10-05-2007 | DE 102005052879 A1<br>ES 2299380 A1 | 10-05-2007<br>16-05-2008 |
| US 2007240663 A1 | 18-10-2007 | DE 102007000220 A1<br>JP 4654964 B2<br>JP 2007285153 A<br>US 2007240663 A1 | 17-01-2008<br>23-03-2011<br>01-11-2007<br>18-10-2007 |
| WO 2008090160 A1 | 31-07-2008 | DE 102007003854 A1<br>WO 2008090160 A1 | 07-08-2008<br>31-07-2008 |
| US 2006144360 A1 | 06-07-2006 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2931119 A1
- FR 2931119
- FR 1157867
- FR 1157868